# EUROPEAN PATENT SPECIFICATION

(11) **EP 2 592 135 B1**
(45) Date of publication and mention of the grant of the patent: **14.01.2015**
(21) Application number: 11803187.1
(22) Date of filing: 08.07.2011
(51) Int. Cl.: C12H 1/16, A23L 3/10

(54) **METHOD FOR CONSERVING BOTTLED WINE IN AN OPEN BOTTLE AND DEVICE FOR IMPLEMENTING SAME**
VERFAHREN ZUR KONSERVIERUNG VON WEIN IN EINER OFFENEN FLASCHE UND VORRICHTUNG ZUR ANWENDUNG DIESES VERFAHRENS
PROCÉDÉ POUR LA CONSERVATION DE VIN EN BOUTEILLE APRÈS OUVERTURE DE LA BOUTEILLE ET DISPOSITIF POUR LA MISE EN OEUVRE DE CE PROCÉDÉ

(30) Priority: 08.07.2010 ES 201000881
(43) Date of publication of application: 15.05.2013
(73) Proprietor: Pulltap's, S.L., 08205 Sabadell (Barcelona) (ES)
(72) Inventor: BRUCART PUIG, Ramón, E-08206 Sabadell (ES)
(74) Representative: Toro Gordillo, Ignacio Maria
(86) International application number: PCT/ES2011/070500
(87) International publication number: WO 2012/004446

(56) References cited:
- EP-A1- 2 000 408
- CN-U- 86 207 235
- ES-B1- 2 190 871
- ES-T3- 2 074 664
- GB-A- 2 401 862
- RU-A- 2007 147 542

## Description

### OBJECT OF THE INVENTION

The present invention is related to a method for the preservation of bottled wine after the bottle has been opened, and when all its content has not been consumed, specifically by eliminating the oxygen present in said bottle, to prevent the oxidation of residual wine, which oxidation results in the deterioration of the wine.

Therefore, after the initial opening of the bottle, and when all of its content is not consumed, as it frequently happens, the organoleptic characteristics of the wine are maintained practically indefinitely, i.e. until all the content of the bottle is consumed.

The invention also concerns the device for the implementation of the method, i.e. a device with which it is feasible to remove the oxygen from the inside of the bottle, once it has been opened and the empty space of the same has been occupied by ambient air.

### BACKGROUND OF THE INVENTION

As it is known, a properly bottled wine can keep intact its organoleptic characteristics, and even improve them over a significantly extended period of time of several years.

However, once the bottle has been opened the situation changes drastically if its content is not consumed completely immediately, so that in this case the residual wine, that on many occasions is most of it, i.e. that exceeds the quantity of wine that has been consumed, suffers a rapid deterioration by oxidation, such that after a few hours it loses a good part of its properties, becoming a very low quality wine, useless in most cases.

This is due to that the volume of extracted wine after opening the bottle is replaced with ambient air, and one of the key components of this air is oxygen, which when it comes into contact with the residual wine causes the oxidation of the same and its consequent deterioration.

This problem, which is much more serious as the quality of the wine is higher and consequently its price, occurs most often at the household level, where the wine consumer(s) are unable to finish a bottle in one meal, for example, but it also occurs at the level of public facilities such as bars, cafes and the like, where the customer requests a glass of a particular brand of wine, and usually considerable time passes until another customer requests the same wine.

Different solutions have been tested for this problem, but for one or another reason they have been proven unsatisfactory in practice. The only known and functionally efficient solution, is to replace the original plug of the bottle, after opening the same, by a special plug equipped with two canes, one angled for pressurized wine output in vertical position of the bottle, and another one attachable to a small tank pressurized with inert gas, such that the wine comes out propelled by this gas, after having expelled the air which had entered into the bottle at the time of its initial opening. Regardless of the fact that the reliability of this system is not complete, this solution is expensive because of the pressurized inert gas consumption.

### DESCRIPTION OF THE INVENTION

The method for the preservation of the wine bottled after opening the bottle proposed by the invention, fully satisfactorily solves this problem, ensuring a total removal of the oxygen present in the bottle and with the participation of cheap elements.

More specifically the method proposed by the invention is based on the removal of the oxygen through combustion, i.e. by causing inside the bottle and with a greater or lesser quantity of residual wine, the combustion of a suitable matter, such as for example alcohol, which in its combustion uses as component the air present inside the bottle, and that as a result eliminates the oxygen present in the latter.

The total elimination of the oxygen is ensured as it is such absence of oxygen the one that causes the extinction of the flame generated by the product that is being burned.

The product to be burned may be alcohol, as previously stated, housed in a small pan or container capable of passing through the mouth of the bottle and assisted by a supportive arm of appropriate length, but also a flammable gas can be used, that when is introduced into the bottle causes the removal of all the oxygen that could exist in the same when it is burned.

Another variant of embodiment of the invention would be a burner with special features, specifically with a length that is able to reach the vicinity of the bottom of the bottle and with a diameter that allows the passage of the same through the neck of said bottle, keeping it clasped from the exterior. In this case the burner flame should also be approached to the surface of the wine and the total removal of the oxygen would occur when the burner extinguishes.

According to a preferred embodiment of the invention, the one corresponding to the use of a small pan or container of the combustible product, said small pan will be associated to a telescopic arm, able to adapt its length to the distance between the mouth of the bottle and the level of the residual wine, said telescopic arm being associated to a special plug of the type that are radially expandable through a pivoting lever, such that the support that relates plug and telescopic arm acts as a penetration limit stop of the telescopic arm inside the bottle, while the plug ensures a watertight sealing of the same, after the removal of the oxygen inside, at least as safe as the initial plug of the bottle.

According to a second variant of embodiment of the invention, the plug itself may constitute a reservoir for the flammable or combustible product, such that the same is hollow and open on the top, with the corresponding lid, with the particularity that in correspondence with its upper end a cylindrical neck is established, wherein a chain associated to the small pan carrying the combustible liquid is rollable/unrollable, and emerging through a hole in a housing with possibility of rotation, that covers said neck, and that is limited by a couple of circumferential flanges, arranged on the top and bottom of the same.

In this way, the device allows having a minimum volumetric occupancy in inoperative position, since the chain is rolled in the bosom of the aforementioned housing, this being easily removable, without the need for other external accessories such as a fuel dispenser container, since the plug itself constitutes said container.

### DESCRIPTION OF THE DRAWINGS

To complement the description that will be carried out next and in order to help a better understanding of the features of the invention, in accordance with a preferred example of practical embodiment of the same, a set of drawings is accompanied as an integral part of said description in which with illustrative character and without limitation, the following has been represented:
Figure 1.- It shows a plot according to a general perspective of the device used for the implementation of the method object of the invention.
Figure 2.- It shows another perspective view of the practical implementation of the device depicted in the previous figure, showing the small pan carrying the combustion product inside the bottle for the removal of the oxygen contained in the same.
Figure 3.- It shows a rigid rod carrying a small pan and a ring as support to the bottle.
Figure 4.- It shows a perspective and exploded view of a second variant of embodiment for the device of the invention.
Figure 5.- It shows a perspective view of the device of the previous figure properly mounted.
Figure 6.- It shows, finally, a top perspective view of the assembly of figures 4 and 5, without its lid, for access to the combustible liquid housed within it.

### PREFERRED EMBODIMENT OF THE INVENTION

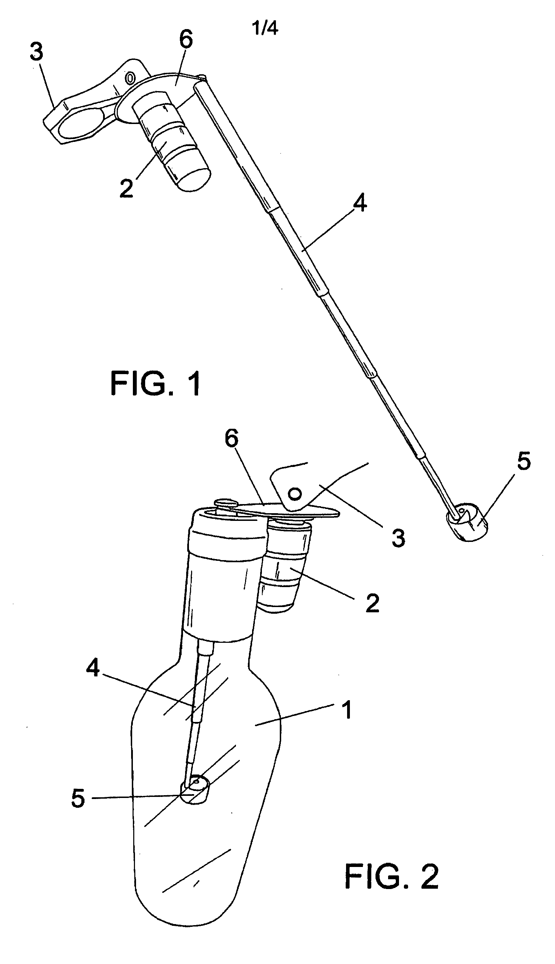

The implementation of the method of the invention, i.e. for the removal of oxygen inside a bottle (1) after opening the same, is carried out in accordance with a first example of practical embodiment, through the device depicted in figures 1 and 2, which is part of a conventional airtight plug (2), and that acts by expansion after the actuation of an external lever (3), inside the bottle neck, closing the same.

Thus, the device of the invention is constituted by a telescopic rod (4) extending laterally from the body of the plug (2), in correspondence with the point of attachment of the lever (3) to the plug (2) itself, which rod (4) can be adjusted in length manually, since it is formed by several stretches telescopically coupled to each other, such that the free end includes a small pan (5) which may contain a combustible product, such as e.g. alcohol, so before inserting it inside the bottle the level of wine contained in the bottle must be checked, in order to manually adjust the length of the rod (4) up to that height, i.e. until reaching the top level of the wine contained in the bottle (1).

Therefore, once this manual adjustment of the rod (4) has been achieved, the same is introduced inside the bottle (1), as depicted in figure 2, leaving the small pan (5) with the combustible product above the level of wine, such that after the ignition of the flammable product, the corresponding combustion of the product inside the small pan (5) will occur and therefore the consumption and respective removal of the oxygen contained inside the bottle.

Obviously, the combustible product uses in its combustion the air existing inside the bottle, and as a result the oxygen removal is achieved.

When the oxygen has been removed in its entirety, it is evident that the combustible product extinguishes since it has no oxygen for combustion, such that once that state has been achieved, i.e. the total removal of oxygen or air contained inside the bottle, simply remove the rod (4) previously folded to the maximum, to immediately apply the plug (2) on the corresponding bottle (1), and by using the actuating lever (3), establishing the expansion of this plug (2) and corresponding sealing of the bottle (1), allowing the wine contained in that bottle to be preserved for a notable period of time, maintaining its organoleptic properties.

The fuel product can be alcohol, without ruling out e.g. a flammable gas that is inserted into the bottle such that when it is introduced in this, it will cause in turn the removal of all the oxygen contained in the same.

Obviously the fuel can be any that is suitable for the purpose being pursued, either in gaseous, liquid or solid state. In the event that the flame has poor visibility, the fuel can include a colorant to enhance its visualization.

Another way to carry out the oxygen removal can be through a burner with a suitable thickness and length to allow its introduction through the neck of the bottle and to reach the bottom of this or at least the top level of the wine contained in the same.

The support (6) relating the telescopic arm (4) with the plug (2), constitutes a penetration limit stop element of the arm (4) itself inside the bottle (1).

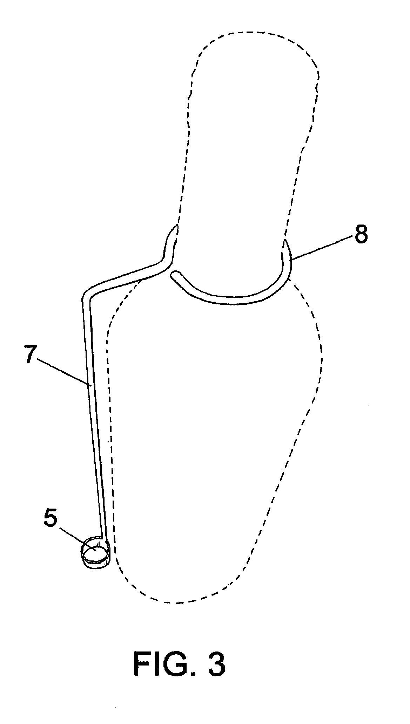

The rod that supports the small pan can be a stiff rod (7) and can have a ring (8) as a support to the bottle, as shown in figure 3.

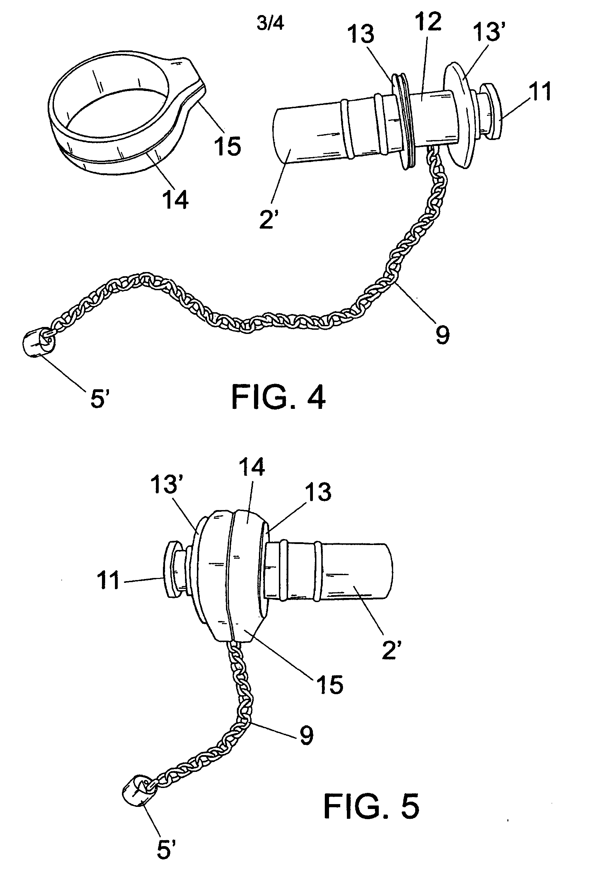

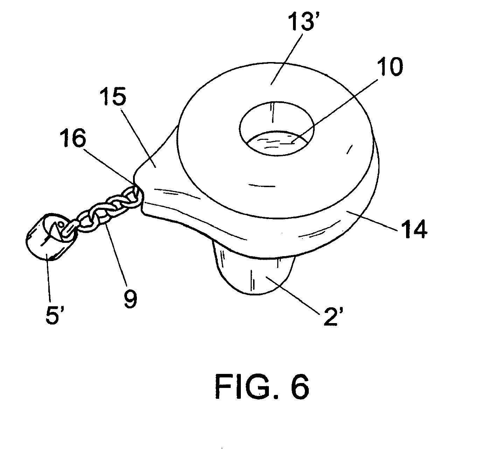

In a second variant of practical embodiment, the one shown in figures 4 to 6, the plug (2') may be internally hollow, constituting a deposit for the flammable or combustible product (10), which can be accessed through removal of the corresponding lid (11), such that in correspondence with its upper end it establishes a cylindrical neck (12), from which a chain (9) that ends in a small pan (5') recipient of the fuel (10) emerges, such that said neck is delimited by a pair of perimeter flanges (13-13'), having been envisaged that between said flanges a housing (14) can move angularly, with a neck (15) in which a hole (16) for passage of the chain is established, such that said element, when rotated between the flanges, acts as a guide, rolling the chain around the neck (12), such that in inoperative situation it is rolled up, not constituting a prominent element.

Therefore, and from this structure, when the method of the invention is going to be carried out, it is only necessary to unroll the chain (9), and to insert the small pan with the flammable product in the bosom of the bottle; once ignited this, wait until the oxygen is consumed, and extract said chain, to then proceed to attach the plug (2') leaving the wine perfectly isolated from oxygen.

## Claims

1. Method for the preservation of the wine bottled after opening the bottle, which being provided for its application in those cases in which the opening of a bottle is carried out and the wine contained in the same is not consumed in its entirety, in order to maintain the organoleptic properties of that residual wine, is **characterized in that** it consists of removing the oxygen present in the bottle, carrying out that oxygen removal by burning an innocuous combustible product that uses the air existing inside the bottle in its combustion, having planned that after the removal of the oxygen the sealing of the bottle is carried out.

2. Method for the preservation of the wine bottled after opening the bottle, according to claim 1, **characterized in that** the combustible product used is alcohol.

3. Method for the preservation of the wine bottled after opening the bottle, according to claim 1, **characterized in that** the combustible product used is a flammable gas, liquid or solid.

4. Method for the preservation of the wine bottled after opening the bottle, according to previous claims, **characterized in that** the product used as fuel is introduced into the bottle on a small removable tank or container.

5. Method for the preservation of the wine bottled after opening the bottle, according to claim 1, **characterized in that** the oxygen removal inside the bottle is carried out through a burner that can be introduced into the bottle and removed after being extinguished by oxygen removal.

6. Device for the implementation of the method of the previous claims, which being associated with an expansion plug that can be operated by a lever to set the seal of a bottle of wine after its initial opening, is **characterized in that** it is constituted from a telescopic rod (4) associated with the corresponding plug (2) through a support (6), which rod (4) at its free end carries a small pan (5) containing the combustible product.

7. Device for the implementation of the method of the previous claims, according to claim 6, **characterized in that** the telescopic rod (4) is manually adjustable in length to fit the height between the upper level of the wine contained inside the bottle (1) and its mouth.

8. Device for the implementation of the method of the previous claims, according to claims 6 and 7, **characterized in that** the telescopic rod (4) is related with the plug (2) through a support (6) established between the expansion plug (2) and the actuating lever (3) of the same.

9. Device for the implementation of the method of the previous claims, **characterized in that** the rod carrying the small pan (5) can be a non-telescopic rigid rod (7).

10. Device for the implementation of the method of the previous claims, **characterized in that** the small pan may carry a wooden match.

11. Device for the implementation of the method of the previous claims, **characterized in that** the fuel can be gaseous, liquid or solid.

12. Device for the implementation of the method of the previous claims, **characterized in that** the fuel can incorporate a flame colorant.

13. Device for the implementation of the method of claims 1 to 5, **characterized in that** it is constituted from a hollow plug (2'), which is a container for the flammable product or fuel (10), assisted by the corresponding lid (11), which plug includes, in correspondence with its upper end, a cylindrical neck (12), from which emerges a chain (9) that ends in a small pan (5') receiving the fuel (10), which neck has at its ends a couple of perimeter flanges (13-13'), having been envisaged that between these flanges a housing (14) is angularly moved, serving as a winding/unwinding element of the chain, with a neck (15) in which there is a hole (16) for passage of said chain (9).

## Patentansprüche

1. Verfahren zur Konservierung von in einer Flasche abgefülltem Wein nach dem Öffnen der Flasche, welches für jene Fälle vorgesehen ist, in welchen eine Flasche geöffnet wird und der in dieser enthaltene Wein nicht vollständig konsumiert wird, mit dem Ziel, die organoleptischen Eigenschaften jenes restlichen Weins aufrechtzuerhalten, **dadurch gekennzeichnet, dass** es darin besteht, den in der Flasche befindlichen Sauerstoffs zu entfernen, wobei jenes Entfernen von Sauerstoff mittels Verbrennen eines unschädlichen brennbaren Produkts erfolgt, welches bei seiner Verbrennung die im Inneren der Flasche befindliche Luft verwendet, wobei vorgesehen ist, dass nach dem Entfernen des Sauerstoffs das Abdichten der Flasche erfolgt.

2. Verfahren zur Konservierung von in einer Flasche abgefülltem Wein nach dem Öffnen der Flasche nach Anspruch 1, **dadurch gekennzeichnet, dass** das verwendete brennbare Produkt Alkohol ist.

3. Verfahren zur Konservierung von in einer Flasche abgefülltem Wein nach dem Öffnen der Flasche nach Anspruch 1, **dadurch gekennzeichnet, dass** das verwendete brennbare Produkt ein Gas, eine Flüssigkeit oder ein Feststoff ist, welche entflammbar sind.

4. Verfahren zur Konservierung von in einer Flasche abgefülltem Wein nach dem Öffnen der Flasche nach den vorherigen Ansprüchen, **dadurch gekennzeichnet, dass** das als Brennstoff verwendete Produkt in das Innere der Flasche auf ein kleines entnehmbares Gefäß bzw. Behälter eingeführt wird.

5. Verfahren zur Konservierung von in einer Flasche abgefülltem Wein nach dem Öffnen der Flasche nach Anspruch 1, **dadurch gekennzeichnet, dass** das Entfernen des Sauerstoffs im Inneren der Flasche mittels eines Feuerzeugs erfolgt, welches in das Innere der Flasche eingesetzt, und, nachdem es durch das Entfernen des Sauerstoffs abgeschaltet wurde, entnommen werden kann.

6. Vorrichtung zur Umsetzung des Verfahrens gemäß der vorherigen Ansprüche, welche mit einem Ausdehnungsverschluss, der durch einen Hebel bedient werden kann, um das Abdichten einer Weinflasche nach dem anfänglichen Öffnen zu bewirken, verbunden ist, **dadurch gekennzeichnet, dass** sie durch eine Teleskopstange (4), welche durch eine Halterung (6) mit dem entsprechenden Verschluss (2) verbunden ist, gebildet ist, wobei die Stange (4) an ihrem freien Ende einen Napf (5) trägt, welcher das brennbare Produkt enthält.

7. Vorrichtung zur Umsetzung des Verfahrens gemäß den vorherigen Ansprüchen, nach Anspruch 6, **dadurch gekennzeichnet, dass** die Teleskopstange (4) von Hand in der Länge verstellt werden kann, um sich an die Höhe zwischen dem oberen Pegel des im Inneren der Flasche (1) enthaltenen Weins und der Öffnung derselbigen anzupassen.

8. Vorrichtung zur Umsetzung des Verfahrens gemäß den vorherigen Ansprüchen, nach den Ansprüchen 6 und 7, **dadurch gekennzeichnet, dass** die Teleskopstange (4) über eine Halterung (6), welche zwischen dem Ausdehnungsverschluss (2) selbst und dem entsprechenden Betätigungshebel (3) derselbigen gebildet ist, mit dem Verschluss (2) verbunden ist.

9. Vorrichtung zur Umsetzung des Verfahrens gemäß den vorherigen Ansprüchen, **dadurch gekennzeichnet, dass** die Stange, welche den Napf (5) trägt, eine starre, nicht teleskopische Stange (7) sein kann.

10. Vorrichtung zur Umsetzung des Verfahrens gemäß den vorherigen Ansprüchen, **dadurch gekennzeichnet, dass** der Napf ein Holzstreichholz tragen kann.

11. Vorrichtung zur Umsetzung des Verfahrens gemäß den vorherigen Ansprüchen, **dadurch gekennzeichnet, dass** der Brennstoff gasförmig, flüssig oder fest sein kann.

12. Vorrichtung zur Umsetzung des Verfahrens gemäß den vorherigen Ansprüchen, **dadurch gekennzeichnet, dass** der Brennstoff einen Flammenfarbstoff beinhalten kann.

13. Vorrichtung zur Umsetzung des Verfahrens gemäß den Ansprüchen 1 bis 5, **dadurch gekennzeichnet, dass** sie aus einem im Inneren hohlen Verschluss (2') gebildet ist, welcher einen Behälter für das entflammbare bzw. brennbare Produkt (10) bildet, welcher von dem entsprechenden Deckel (11) unterstützt wird, wobei der Verschluss in Verbindung mit seinem oberen Ende einen zylinderförmigen Hals (12) beinhaltet, von dem eine Kette (9) abgeht, welche an einem Napf (5') abschließt, der den Brennstoff (10) enthält, wobei an den Enden des Halses ein Paar von umfänglichen Begrenzungsscheiben (13-13') gebildet ist, wobei vorgesehen ist, dass sich zwischen den genannten Begrenzungsscheiben ein Gehäuse (14) winklig in Abhängigkeit eines Aufroll-/Abrollelements der Kette verschiebt, welches einen Hals (15) aufweist, an welchem ein Loch (16) für den Durchtritt der genannten Kette (9) gebildet ist.

## Revendications

1. ^{er}.- Procédé pour la conservation du vin mis en bouteille après l'ouverture de la bouteille, qui étant prévu pour son application dans les cas où l'ouverture d'une bouteille est réalisée et où le vin contenu dans cette dernière n'est pas entièrement consommé, avec pour objet de parvenir à conserver les propriétés organoleptiques de ce vin résiduel, est **caractérisé en ce qu'**il consiste à éliminer l'oxygène présent dans la bouteille, cette élimination d'oxygène étant réalisée au moyen de la combustion d'un produit combustible inoffensif qui utilise lors de sa combustion l'air présent à l'intérieur de la bouteille, ayant prévu la réalisation de la fermeture hermétique de la bouteille après l'élimination de l'oxygène.

2. ^{ème}.- Procédé pour la conservation du vin mis en bouteille après l'ouverture de la bouteille, selon la revendication 1, **caractérisé en ce que** le produit combustible utilisé est de l'alcool.

3. ^{ème}.- Procédé pour la conservation du vin mis en bouteille après l'ouverture de la bouteille, selon la revendication 1, **caractérisé en ce que** le produit combustible utilisé est un gaz, un liquide ou un solide inflammable.

4. ^{ème}.- Procédé pour la conservation du vin mis en bouteille après l'ouverture de la bouteille, selon les revendications précédentes, **caractérisé en ce que** le produit utilisé comme combustible est introduit à l'intérieur de la bouteille sur un petit dépôt ou un récipient extractible.

5. ^{ème}. - Procédé pour la conservation du vin mis en bouteille après l'ouverture de la bouteille, selon la revendication 1, **caractérisé en ce que** l'élimination de l'oxygène à l'intérieur de la bouteille est réalisée au moyen d'un briquet susceptible d'être introduit à l'intérieur de la bouteille et d'être extrait après qu'il est éteint par l'élimination de l'oxygène.

6. ^{ème}.- Dispositif pour la mise en oeuvre du procédé des revendications précédentes, qui étant associé à un bouchon d'expansion actionnable au moyen d'un levier pour établir la fermeture hermétique d'une bouteille de vin après son ouverture initiale, est **caractérisé en ce qu'**il est constitué à partir d'une tige télescopique (4) associée au bouchon correspondant (2) au moyen d'un support (6), d'une tige (4) qui sur son extrémité libre est porteuse d'un vase (5) contenant le produit combustible.

7. ^{ème}.- Dispositif pour la mise en oeuvre du procédé des revendications précédentes, selon la revendication 6, **caractérisé en ce que** la tige télescopique (4) est manuellement réglable en longueur pour s'adapter à la hauteur entre le niveau supérieur du vin contenu à l'intérieur de la bouteille (1) et l'embouchure de celle-ci.

8. ^{ème}.- Dispositif pour la mise en oeuvre du procédé des revendications précédentes, selon les revendications 6 et 7, **caractérisé en ce que** la tige télescopique (4) est reliée au bouchon (2) à travers un support (6) établi entre le propre bouchon d'expansion (2) et le levier (3) d'actionnement correspondant de celle-ci.

9. ^{ème}.- Dispositif pour la mise en oeuvre du procédé des revendications précédentes, **caractérisé en ce que** la tige porteuse du vase (5) peut être une tige rigide (7) non télescopique.

10. ^{ème}.- Dispositif pour la mise en oeuvre du procédé des revendications précédentes, **caractérisé en ce que** le vase peut être porteur d'une allumette en bois.

11. ^{ème}.- Dispositif pour la mise en oeuvre du procédé des revendications précédentes, **caractérisé en ce que** le combustible peut être gazeux, liquide ou solide.

12. ^{ème}.- Dispositif pour la mise en oeuvre du procédé des revendications précédentes, **caractérisé en ce que** le combustible peut incorporer un colorant de flamme.

13. ^{ème}.- Dispositif pour la mise en oeuvre du procédé des revendications 1 à 5, **caractérisé en ce qu'**il est constitué à partir d'un bouchon (2') intérieurement creux, qui constitue un dépôt pour le produit inflammable ou combustible (10), assisté par le couvercle (11) correspondant, couvercle qui en correspondance avec son extrémité supérieure incorpore un goulot (12) cylindrique, d'où émerge une chaînette (9) qui finit en un vase (5') récepteur du combustible (10), goulot où sont établis sur ses extrémités une paire de collets périmétraux (13-13'), ayant prévu qu'entre lesdits collets une carcasse (14) soit déplacée angulairement, en fonction d'élément d'enroulement/déroulement de la chaînette, avec un goulot (15) dans lequel est établi une orifice (16) pour le passage de ladite chaînette (9).
